# EUROPÄISCHE PATENTSCHRIFT

(11) **EP 2 114 601 B1**
(45) Veröffentlichungstag und Bekanntmachung des Hinweises auf die Patenterteilung: **09.11.2016**
(21) Anmeldenummer: 07818430.6
(22) Anmeldetag: 26.09.2007
(51) Int. Cl.: B23B 29/04

(54) **WERKZEUGHALTER**
TOOL HOLDER
PORTE-OUTIL

(30) Priorität: 04.11.2006 DE 102006052051
(43) Veröffentlichungstag der Anmeldung: 11.11.2009
(73) Patentinhaber: KENNAMETAL INC., Latrobe, PA 15650 (US)
(72) Erfinder: PUSCHMANN-FRENKEN, Jürgen, 90455 Nürnberg (DE)
(74) Vertreter: FDST Patentanwälte
(86) Internationale Anmeldenummer: PCT/EP2007/008346
(87) Internationale Veröffentlichungsnummer: WO 2008/052623

(56) Entgegenhaltungen:
- DE-A1- 4 221 735
- DE-U1- 8 520 724
- DE-U1- 8 633 959
- US-A1- 2006 104 728
- US-B1- 6 543 318

## Beschreibung

Die Erfindung betrifft einen Werkzeughalter zur Aufnahme einer Anzahl von Schneidwerkzeugen mit dem Oberbegriff des Anspruchs 1.

Ein derartiger Werkzeughalter ist beispielsweise zu entnehmen aus der DE 600 23 191 T2.

Bei der spanenden Bearbeitung von Werkstücken werden unter anderem Werkzeughalter eingesetzt, in die austauschbar Schneidwerkzeuge einsetzbar sind. Die Schneidwerkzeuge weisen hierbei einen Befestigungsschaft auf, mit dem sie in eine Werkzeugaufnahme des Werkzeughalters einsteckbar und darin verspannbar sind. Das Schneidwerkzeug weist hierbei eine Schneide oder ein Schneidelement auf, welches austauschbar am Schneidwerkzeug befestigt sein kann.

Um die Stillstandzeiten bei einem Werkzeugwechsel möglichst gering zu halten, ist eine problemlose und einfache Austauschbarkeit des Schneidwerkzeuges von besonderer Bedeutung.

Aus der DE 600 23 191 T2 ist ein Schnellwechselwerkzeug-Bestückungssystem zu entnehmen, bei dem ein Schneidwerkzeug in einem als Werkzeugträgerteil bezeichneten Werkzeughalter austauschbar befestigt werden kann. Das Schneidwerkzeug wird hierbei in eine Werkzeugaufnahme eingesetzt. Quer zu der Längsrichtung der Werkzeugaufnahme wird der Werkzeughalter von einer Bohrung durchdrungen, in die ein Spannbolzen eingesetzt ist. Dieser ist mit seinem einen Ende in eine Spannmutter eingeschraubt. Die Spannmutter wird hierbei von der gegenüberliegenden Seite in die Bohrung eingesetzt. Spannbolzen und Spannmutter sind innerhalb der Bohrung im Wesentlichen frei beweglich. Beim Verspannen werden ein Bolzenkopf des Spannbolzens sowie die Spannmutter aufeinanderzu gezogen und halten dadurch den Befestigungsschaft des Schneidwerkzeugs in der Werkzeugaufnahme.

Eine weitere Maßnahme, um die Stillstandzeit zu reduzieren, besteht darin, an einem Werkzeughalter mehrere Werkzeugaufnahmen vorzusehen. Bei der Werkstückbearbeitung besteht daher die Möglichkeit, beispielsweise durch einfaches Drehen des Werkzeughalters, unterschiedliche Arten von Schneidwerkzeugen für unterschiedliche Bearbeitungsvorgänge in eine Bearbeitungsposition zu bringen. Auch kann ein verschlissenes Schneidwerkzeugs aus der Bearbeitungsposition heraus und ein unverbrauchtes Schneidwerkzeug in die Bearbeitungsposition hinein gedreht werden. Bei einem derartigen Mehrfach-Werkzeughalter besteht allerdings das Problem, dass der Werkzeughalter notwendigerweise an Volumen zunimmt. Dieser erhöhte Raumbedarf kann bei beengten Platzverhältnissen zu Nachteilen führen.

Aus der DE 85 20 724 U1 ist ein Ausdrehwerkzeug zu entnehmen, bei dem ein Werkzeugkopf in eine Aufnahmebohrung mit einem Paßzapfen eingesetzt ist. Der Paßzapfen ist über eine Spanneinrichtung in der Aufnahmebohrung gehalten. Hierzu ist eine Durchgangsbohrung ausgebildet, in die ein Spannbolzen eingeführt ist, der beidseitig von Spannschrauben gehalten ist.

Aus der DE 42 21 735 A1 ist eine Befestigung eines Werkzeugträgers an einer Spindel zu entnehmen. Ein Schaft des Werkzeugträgers ist über Spannzangen gespannt, die mit Hilfe eines Bolzens mit gegenläufigen Gewinden gespannt werden. Der Bolzen kann über ein Zwischenstück betätigt werden, welches mit einem Mehrkant in den Bolzen eingesteckt ist. Über eine Halteplatte ist das Zwischenstück gegen ein Herausfallen gesichert.

Der vorliegenden Erfindung liegt die Aufgabe zugrunde, einen kompakten Werkzeughalter anzugeben, der zur Aufnahme von mehreren Schneidwerkzeugen ausgebildet ist und ein schnelles und einfaches Auswechseln des jeweiligen Schneidwerkzeugs ermöglicht.

Die Aufgabe wird gemäß der Erfindung gelöst durch einen Werkzeughalter mit den Merkmalen des Anspruchs 1. Der Werkzeughalter umfasst eine Anzahl von in einem Grundkörper vorgesehenen Werkzeugaufnahmen, in die jeweils ein Schneidwerkzeug mit einem Befestigungsschaft einsteckbar und in der Werkzeugaufnahme über eine Spanneinrichtung verspannbar ist. Die Spanneinrichtung umfasst hierbei einen seitlich durch eine Bohrung Im Grundkörper bis zur Werkzeugaufnahme reichenden Spannbolzen, der an seinem äußeren Ende einen über ein Einstellwerkzeug betätigbaren Bolzenkopf aufweist. Der Bolzenkopf ist hierbei durch ein am Grundkörper im Bereich der Bohrung angebrachtes und einen Anschlag für den Bolzenkopf bildendes Sicherungselement gesichert. Das Sicherungselement ist am Grundkörper angeschraubt.

Der besondere Vorteil bei dieser Ausgestaltung ist darin zu sehen, dass durch das zusätzliche Sicherungselement der Spannbolzen gegen ein Herausfallen gesichert ist, und dass daher die Spanneinrichtung lediglich von einer Seite in den Grundkörper eingesetzt werden kann. Insgesamt ist daher durch das Sicherungselement eine Verliersicherung gebildet. Eine Durchgangsbohrung und eine beidseitige Zugänglichkeit der Bohrung ist daher nicht erforderlich und auch nicht vorgesehen. Die Bohrung endet vielmehr Im Inneren des Grundkörpers. Durch diese Ausgestaltung können daher die Werkzeugaufnahmen problemlos in den Grundkörper integriert werden, so dass sie in diesem nebeneinander angeordnet sind. Es ist daher nicht erforderlich, dass die Werkzeugaufnahmen als separate Elemente lösbar mit dem Grundkörper verbunden sind. Denn dies führt aufgrund der notwendigen zusätzlichen Befestigungselemente zu einem erhöhten Raumbedarf.

Demgegenüber ist der Grundkörper bei dem hier beschriebenen Werkzeughalter bevorzugt einstückig ausgebildet, d.h. die Werkzeugaufnahmen sind als Bohrungen in einem einheitlichen, den Grundkörper bildenden Block ausgebildet. Prinzipiell besteht die Möglichkeit, mehrere Werkzeugtragelemente vorzusehen, wobei jedes der einzelnen Werkzeugtragelemente bevorzugt eine Werkzeugaufnahme aufweist, die mit der Spanneinrichtung versehen ist. Die einzelnen Werkzeugtragelemente bilden bei dieser Ausführungsvariante gegebenfalls gemeinsam mit einem Tragkörper für die einzelnen Werkzeugtragelemente den Grundkörper des Werkzeughalters.

Die besonderen Vorteile insbesondere im Hinblick auf die kompakte Ausgestaltung werden insbesondere bei einem Werkzeughalter mit zwei oder mehreren Werkzeugaufnahmen erreicht. Prinzipiell kann auch lediglich eine einzige Werkzeugaufnahme vorgesehen sein.

Bevorzugt sind die Werkzeughalter stirnseitig oder radial an der Umfangseite angeordnet.

Das Schneidwerkzeug umfasst beispielsweise einen Schneidenträger, wie z.B. eine Kassette, an dem austauschbar ein Schneidelement, beispielsweise eine Wendeschneidplatte, befestigt ist. Das Schneidwerkzeug weist daher an seinem rückseitigen Ende den Spann- oder Befestigungsschaft auf, mit dem es in die Werkzeugaufnahme einsteckbar ist. Am gegenüberliegenden Ende ist das Schneidelement oder eine Schneide vorgesehen. Das Schneidwerkzeug kann prinzipiell auch monolithisch sein, d.h. die Schneide ist nicht austauschbar am Schneidwerkzeug befestigt, sondern vielmehr integraler und fest verbundener Bestandteil des Schneidwerkzeugs.

Gemäß einer zweckdienlichen Ausgestaltung Ist das Sicherungselement hierbei als ein Einsatz ausgebildet. Das Sicherungselement ist daher ein separates Bauteil, das fertigungstechnisch einfach herstellbar und zudem auch montagefreundlich in einfacher Weise mit dem Grundkörper verbindbar ist.

Vorzugsweise ist hierbei vorgesehen, dass das Sicherungselement lösbar am Grundkörper befestigt ist. Dies ermöglicht ein problemloses und einfaches Austauschen des Spannbolzens, sofern dies erforderlich wird.

Gemäß einer bevorzugten Weiterbildung ist darüber hinaus vorgesehen, dass das Sicherungselement eine Führung für den Bolzenkopf ausbildet. D.h. der Bolzenkopf gleitet in Bolzenlängsrichtung zumindest ein Teilstück innerhalb des Sicherungselements. Durch diese Führung wird eine genaue Positionierung des Spannbolzens und damit eine möglichst exakt definierte Spannwirkung der gesamten Spanneinrichtung erreicht.

Vorzugsweise ist am Bolzenkopf ein Gegenanschlag Insbesondere in Form eines Ringstegs vorgesehen, welcher in der montierten Stellung dem am Sicherungselement vorgesehenen Anschlag gegenüberliegt. Durch das Zusammenwirken des Anschlags mit dem Gegenanschlag Ist verhindert, dass der Spannbo Izen aus der Bohrung herausfallen kann, beispielsweise wenn kein Schneidwerkzeug in der Werkzeugaufnahme angeordnet ist und der Spannbolzen daher ohne Widerlager lose in der Bohrung einliegt. Die Ausgestaltung insbesondere eines Ringstegs im Anschluss an den Bolzenkopf ist fertigungstechnisch problemlos ausführbar. Alternativ zu der Anordnung des Ringstegs am Spannbolzen ist vorgesehen, dass der Bolzenkopf selbst den Gegenanschlag bildet, d.h. dass er mit seiner endseitigen Stirnseite mit dem Anschlag des Sicherungselements zusammenwirkt. Auch bei dieser Ausführungsvariante bildet das Sicherungselement bevorzugt eine Führung für den Bolzenkopf.

In einer besonders einfachen und bevorzugten Ausgestaltung ist das Sicherungselement eine Hülse, insbesondere eine Gewindehülse, die in die Bohrung von außen lösbar einsetzbar bzw. einschraubbar ist. Die bevorzugt zylindrische Hülse bildet dabei durch ihre Innenmantelfläche in einfacher Art und Weise eine Führungsfläche für die Zylindermantelfläche des Bolzenkopfes. Gleichzeitig ist eine Hülse besonders einfach herstellbar.

Gemäß einer zweckdienlichen Ausgestaltung steht das Sicherungselement über den Grundkörper nicht über, d.h. das Sicherungselement fluchtet mit der Außenseite des Grundkörpers oder Ist weiter innenliegend innerhalb der Bohrung im Grundkörper angeordnet. Hierdurch bleibt der kompakte Aufbau des gesamten Werkzeughalters erhalten.

Im Hinblick auf die Spannfunktionalität zum Spannen des Schneidwerkzeugs ist eine in Bohrungslängsrichtung verschiebliche Spannmutter vorgesehen, in die der Spannbolzen mit seinem einen Ende einschraubbar ist. Die Spannmutter sowie der Spannkopf des Spannbolzens weisen an ihren einander zugewandten Bereichen insbesondere konische Teilstücke auf, die als Klemmflächen wirken. Beim Eindrehen des Spannbolzens in die Spannmutter werden diese beiden konischen, nach Art von Kegelstümpfen ausgebildeten Klemmflächen aufeinanderzu bewegt und halten dadurch den zwischen ihnen befindlichen Befestigungsschaft des Schneidwerkzeugs sicher in der Werkzeugaufnahme.

Zweckdienlicherweise ist hierbei die Bewegungsfreiheit der Spannmutter in Bohrungslängsrichtung eingeschränkt, so dass die Spannmutter nur innerhalb eines definierten Bereichs verschieblich ist. Hierzu ist insbesondere ein Sicherungsstift vorgesehen, der seitlich durch den Grundkörper in Richtung zur Spannmutter verläuft.

Bevorzugt bildet hierbei der Sicherungsstift mit der Spannmutter einen Formschluss aus. Insbesondere greift der Sicherungsstift in eine nutartige Ausnehmung der Spannmutter ein. Die Breite der Nut ist hierbei größer als der Durchmesser des Sicherungsstiftes, so dass also eine Relativbewegung zwischen der Nut und dem Sicherungsstift ermöglicht ist. Diese Relativbewegung bestimmt hierbei den Freiraum, innerhalb dessen sich die Spannmutter in Bohrungslängsrichtung bewegen kann.

Ein Ausführungsbeispiel der Erfindung wird im Folgenden anhand der Zeichnungen näher erläutert. Es zeigen jeweils in schematischen und teilweise vereinfachten Darstellungen:
- Fig. 1: eine perspektivische Vorderansicht eines Werkzeughalters mit den Elementen einer Spanneinrichtung, die nach Art einer Explosionsdarstellung dargestellt sind,
- Fig. 2: eine perspektivische Rückansicht auf den Werkzeughalter gemäß Fig. 1 und
- Fig. 3: eine perspektivische Darstellung der einzelnen Elemente der Spanneinrichtung ohne den Grundkörper des Werkzeughalters in den Fig. 1 und 2.

In den Figuren sind gleich wirkende Teile jeweils mit den gleichen Bezugszeichen versehen.

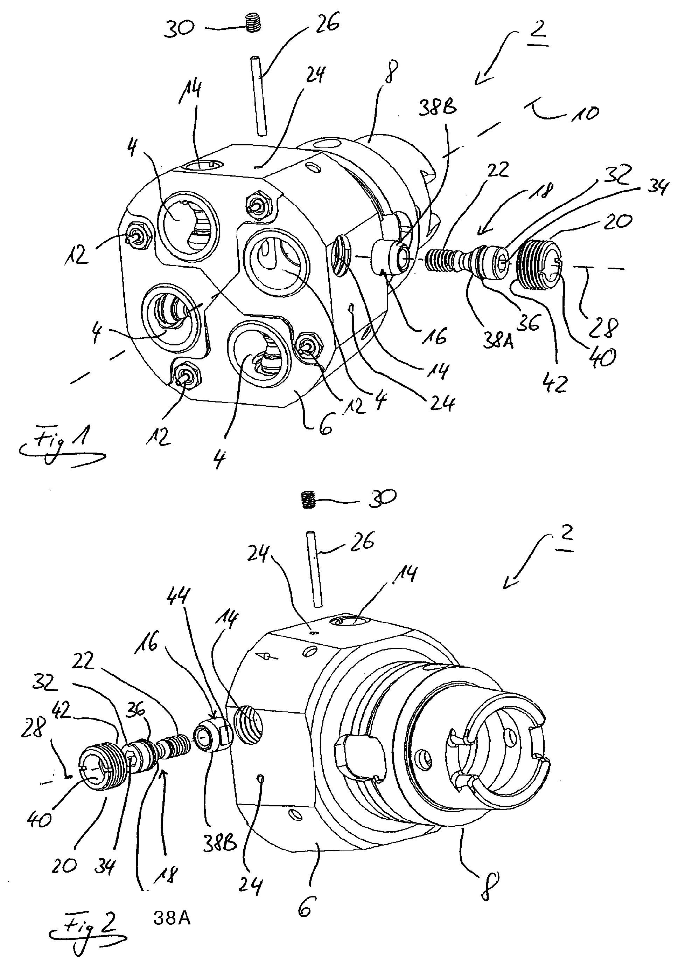

Der in den Fig. 1 und 2 dargestellte Werkzeughalter 2 dient zur Aufnahme von insgesamt vier hier nicht näher dargestellten Schneidwerkzeugen. Diese werden stirnseitig von vorne in entsprechende Werkzeugaufnahmen 4 im Werkzeughalter 2 eingesteckt und dann mittels einer im Folgenden noch näher zu beschreibenden Spanneinrichtung in den Werkzeugaufnahmen 4 befestigt.

Der Werkzeughalter 2 umfasst einen Grundkörper 6, welcher monolithisch aus einem Stück ausgebildet ist oder alternativ hierzu mehrere einzelne aneinander anliegende Werkzeugtragelemente aufweist. Dabei trägt jedes Werkzeugtragelemente jeweils eine Werkzeugaufnahme 4. An seinem rückwärtigen Ende weist der Grundkörper 6 einen Schaft 8 auf, mit dem er in eine entsprechende Aufnahme einer Bearbeitungsmaschine eingespannt wird. Der Werkzeughalter 2 erstreckt sich daher von seiner vorderen Stirnseite, in der die Werkzeugaufnahmen 4 nach Art von Bohrungen eingebracht sind, in Längsrichtung 10 zu dem Schaft 8.

Üblicherweise erfolgt die spanende Bearbeitung eines Werkstücks mit Hilfe jeweils eines der eingesetzten Schneidwerkzeuge. Dabei rotiert üblicherweise das zu bearbeitende Werkstück und das Schneidwerkzeug ist ortsfest angeordnet bzw. vollführt eventuell lediglich eine Linearbewegung entlang einer vorgegebenen Bahn. Insgesamt ist daher ein Drehwerkzeug ausgebildet, bei dem die spanende Bearbeitung aufgrund einer Relativ-Drehbewegung zwischen Werkstück und Schneidwerkzeug erfolgt. Der Mehrfach-Werkzeughalter 2 dient insbesondere zur mehrstufigen Bearbeitung des Werkstücks mit unterschiedlichen Schneidwerkzeugen. Zum Wechsel des jeweils in Eingriff mit dem Werkstück befindlichen Schneidwerkzeugs ist lediglich ein Drehen des Werkzeughalters 2 beispielsweise etwa um 90° erforderlich.

An seiner vorderen Stirnseite sind zu jeder Werkzeugaufnahme 4 jeweils ein Kühlmittelaustritt 12 angeordnet, über die während der spanenden Bearbeitung dem Schneidwerkzeug bei Bedarf Kühlmittel zugeführt wird. Der Grundkörper 6 weist eine im Wesentlichen mehreckige, im Ausführungsbeispiel achteckige Querschnittsfläche auf, und ist bezüglich der Längsachse 10 um 90° rotationssymmetrisch ausgebildet.

Ausgehend von seiner seitlichen Mantelfläche sind jeweils zu den einzelnen Werkzeugaufnahmen 4 in etwa senkrecht zu der durch die Längsachse 10 definierten Richtung orientierte Bohrungen 14 eingebracht. Die Bohrungen 14 enden hierbei jeweils innerhalb des Grundkörpers 6, bilden also keine Durchgangsbohrungen. In jede der Bohrungen 14 werden die Elemente der Spanneinrichtung, nämlich eine Spannmutter 16, ein Spannbolzen 18 sowie eine ein Sicherungselement bildende Gewindehülse 20 von außen eingesetzt. Der Spannbolzen 18 ist zur Montage üblicherweise bereits mit einem endseitigen Bolzengewinde 22 ein Teilstück in die Spannmutter 16 eingeschraubt. Von besonderer Bedeutung ist, dass sämtliche Elemente der Spanneinrichtung einseitig, d.h. von einer einzigen Außenseite, eingeführt werden. Es ist daher nicht erforderlich, dass von der gegenüberliegenden Seite auch eine Zugänglichkeit zu der Werkzeugaufnahme 4 gegeben ist.

Etwa 90° drehversetzt zu der Bohrung 14 ist ebenfalls von der Mantelseite des Grundkörpers 6 her durch eine weitere Bohrung 24 ein Sicherungsstift 26 eingesetzt. Dieser reicht bis in die Werkzeugaufnahme 4 hinein und wirkt im montierten Zustand mit der Spannmutter 16 zusammen. Der Sicherungsstift 26 begrenzt hierbei die Verschieblichkeit der Spannmutter 16 in Bohrungslängsrichtung 28 der Bohrung 14. Der Sicherungsstift 26 wird über eine Madenschraube 30 im Grundkörper 6 gehalten.

Der Spannbolzen 18 weist einen zylindrischen Bolzenkopf 32 auf. Dieser hat im Ausführungsbeispiel eine Innen-Mehrkant-Aufnahme 34, die zur Aufnahme eines Einstellwerkzeuges dient, über das der Spannbolzen 18 verdreht werden kann. In Bohrungslängsrichtung 28 in Richtung zur Spannmutter 16 schließt sich an die zylindrische Mantelfläche des Bolzenkopfes 32 ein Ringsteg 36 an, welcher einen Gegenanschlag definiert. Im weiteren Anschluss ist eine konische, kegelstumpfartige Klemmfläche 38A ausgebildet. Korrespondierend hierzu weist auch die Spannmutter 16 eine derartige Klemmfläche 38B auf.

Die Gewindehülse 20 ist im montierten Zustand in die Bohrung 14 des Grundkörpers 6 eingeschraubt, wobei die Bohrung 14 hierzu ein entsprechendes Innengewinde aufweist. Im montierten Endzustand liegt die Gewindehülse 20 vollständig innerhalb des Grundkörpers 6, steht also nicht über. Die Gewindehülse 20 ist an ihrer äußeren Ringseite geschlitzt ausgebildet, so dass sie über einen herkömmlichen Schraubendreher in die Bohrung 14 ein- oder ausschraubbar ist.

Die Innenseite der Gewindehülse 20 ist mit ihrem Innendurchmesser an den Außendurchmesser des Bolzenkopfes 32 im Bereich dessen äußerer Mantelfläche angepasst. D.h. die Gewindehülse 20 nimmt den Bolzenkopf 32 maximal bis zum Ringsteg 36 auf. Hierbei ist lediglich noch ein geringes Spiel zwischen der Hülsen-Innenseite sowie der Mantelfläche des Bolzenkopfes 32 gebildet. Die Hülseninnenseite stellt daher eine Führung 40 für den Bolzenkopf 32 dar. Die zum Bolzenkopf 32 orientierte vordere Ringfläche der Gewindehülse 20 stellt einen Anschlag 42 dar, mit dem der Ringsteg 36 als Gegenanschlag zusammenwirkt. Der Anschlag 42 und der Ringsteg 36 bilden in ihrem Zusammenwirken eine Verliersicherung für den Spannbolzen 18 und die Spannmutter 16.

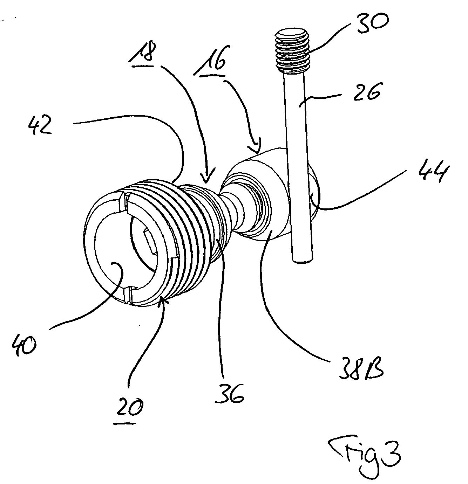

Wie insbesondere aus den Fig. 2 und 3 hervorgeht, greift der Sicherungsstift 26 im montierten Zustand in eine nutartige Aussparung 44 ein. Die Breite der Aussparung 44, d.h. ihre Erstreckung in Bohrungslängsrichtung 28, ist hierbei größer als der Durchmesser des Sicherungsstiftes 26. Die Spannmutter 16 ist daher in Bohrungslängsrichtung 28 relativ zu dem feststehenden Sicherungsstift 26 in einem definierten Bereich hinund her verschiebbar. Die Randseiten der Aussparung 44 bilden Anschläge, die die Bewegungsfreiheit der Spannmutter 16 begrenzen.

Beim Einsatz des Werkzeughalters sind sämtliche Elemente der Spanneinrichtung, nämlich die Spannmutter 16, der Spannbolzen 18 sowie die Gewindehülse 20 auf der einen Seite und weiterhin der Sicherungsstift 26 und die Madenschraube 30 auf der anderen Seite, bereits vormontiert im Werkzeughalter 2 angeordnet. Zum Einsetzen des Schneidwerkzeugs wird dieses mit seinem geeignet ausgestalteten Befestigungsschaft voraus in die Werkzeugaufnahme 4 eingesteckt. Durch Anziehen des Spannbolzens 18 wird dieser in die Spannmutter 16 weiter eingedreht, so dass die beiden Klemmflächen 38A,B aufeinanderzu bewegt werden und der Befestigungsschaft sowohl klemmend als auch formschlüssig gehalten wird. Die Ausgestaltung des Befestigungsschafts sowie der grundsätzliche Spannmechanismus gehen insbesondere aus der DE 600 23 191 T2 hervor, auf die hiermit insoweit Bezug genommen wird.

Zum Werkzeugwechsel braucht lediglich der Spannbolzen 18 gelockert zu werden, so dass die beiden Klemmflächen 38A,B wieder in entgegengesetzter Richtung voneinander entfernt werden. Der Spannbolzen 18 lässt sich hierbei so weit herausdrehen, bis er mit seinem Ringsteg 36 am Anschlag 42 der Gewindehülse 20 zum Anliegen kommt. Auch in dieser gelösten Stellung verbleibt ein Teilstück des Bolzengewindes 22 in der Spannmutter 16.

Insgesamt ist durch die hier beschriebene Ausgestaltung ein äußerst kompakter Werkzeughalter 2 ermöglicht, der mehrere Werkzeugaufnahmen 4 für die Aufnahme von Schneidwerkzeugen aufweist. Die kompakte Ausgestaltung ist hierbei im Wesentlichen dadurch erreicht, dass die Werkzeugaufnahmen 4 direkt in den Grundkörper 6 integriert sind und keine aufgesetzten separaten Einheiten bilden. Dies wird maßgeblich dadurch erreicht, dass sämtliche Elemente der Spanneinrichtung jeweils lediglich von einer Außenseite der Mantelfläche des Grundkörpers 6 eingeführt werden. Es brauchen hier also keine Durchgangsbohrungen vorgesehen sein. Um dies zu erreichen, ist die Gewindehülse 20 als eine Verliersicherung für den Spannbolzen 18 und die Spannmutter 16 ausgebildet.

## Patentansprüche

1. Werkzeughalter (2) mit einem Grundkörper (6), der an seinem rückwärtigen Ende einen Schaft (8) zum Einspannen in einer Aufnahme einer Bearbeitungsmaschine aufweist, wobei im Grundkörper (6) eine Anzahl von Werkzeugaufnahmen (4) vorgesehen sind, in die jeweils ein Schneidwerkzeug mit einem Befestigungsschaft einsteckbar und in der Werkzeugaufnahme (4) über eine Spanneinrichtung verspannbar ist, die einen seitlich durch eine Bohrung (14) im Grundkörper (6) bis zur Werkzeugaufnahme (4) reichenden Spannbolzen (18) umfasst, der an seinem äußeren Ende einen über ein Einstellwerkzeug betätigbaren Bolzenkopf (32) aufweist, **dadurch gekennzeichnet, dass** der Bolzenkopf (32) durch ein am Grundkörper (6) im Bereich der Bohrung (14) angeschraubtes und einen Anschlag (42) für den Bolzenkopf (32) bildendes sowie mit einem Gewinde versehenes Sicherungselement (20) gesichert ist.

2. Werkzeughalter (2) nach Anspruch 1,
bei dem das Sicherungselement (20) als ein Einsatz ausgebildet ist.

3. Werkzeughalter (2) nach Anspruch 1 oder 2,
bei dem das Sicherungselement (20) lösbar am Grundkörper (6) befestigt ist.

4. Werkzeughalter (2) nach einem der vorhergehenden Ansprüche,
bei dem das Sicherungselement (20) eine Führung (40) für den Bolzenkopf (32) ausbildet.

5. Werkzeughalter (2) nach einem der vorhergehenden Ansprüche,
bei dem sich an den Bolzenkopf (32) anschließend ein Gegenanschlag (36) zum am Sicherungselement (20) vorgesehenen Anschlag (42) ausgebildet ist.

6. Werkzeughalter (2) nach einem der vorhergehenden Ansprüche,
bei dem das Sicherungselement (20) eine Hülse, insbesondere Gewindehülse ist, die in die Bohrung (14) von außen lösbar einsetzbar ist.

7. Werkzeughalter (20) nach einem der vorhergehenden Ansprüche, bei dem das Sicherungselement (20) über den Grundkörper (6) nicht übersteht.

8. Werkzeughalter (2) nach einem der vorhergehenden Ansprüche,
bei dem im Grundkörper (6) eine in Bohrungslängsrichtung (28) verschlebliche Spannmutter (16) vorgesehen ist, in die der Spannbolzen (18) geschraubt ist.

9. Werkzeughalter (2) nach Anspruch 8,
bei dem ein Sicherungsstift (26) vorgesehen ist, der seitlich durch den Grundkörper (6) in Richtung zur Spannmutter (16) verläuft und deren Bewegung in Bohrungslängsrichtung (28) begrenzt.

10. Werkzeughalter (2) nach Anspruch 9,
bei dem die Spannmutter (16) eine nutartige Aussparung (44) aufweist, in die der Sicherungsstift (26) eingreift.

11. Werkzeughalter (2) nach einem der vorhergehenden Ansprüche,
bei dem die Bohrung (14) innerhalb des Grundkörpers (6) endet und sämtliche Elemente der Spanneinrichtung einseitig in die Bohrung (14) eingeführt sind.

## Claims

1. A tool holder (2) comprising a base body (6) which has on its rearward end a shaft (8) for clamping a holding fixture of a machine tool, a number of tool holding fixtures (4) being provided in the base body (6) in each of which a cutting tool with a mounting shaft can be inserted and clamped in the tool holding fixture (4) via a clamping device, which includes a clamping bolt (18) that extends laterally through a bore (14) in the base body (6) to the tool holding fixture (4) and has a bolt head (32) on its outer end that is operable via an adjustment tool, **characterized in that** the bolt head (32) is secured via a threaded locking element (20) bolted on the base body (6) in the area of the bore (14) and forming a stop (42) for the bolt head (32).

2. The tool holder (2) according to claim 1,
in which the locking element (20) is formed as an insert.

3. The tool holder (2) according to claim 1 or 2,
in which the locking element (20) is removably mounted on the base body (6).

4. The tool holder (2) according to any of the preceding claims,
in which the locking element (20) forms a guide (40) for the bolt head (32).

5. The tool holder (2) according to any of the preceding claims,
in which a counter stop (36) is subsequently formed on the bolt head (32) for the stop (42) provided on the locking element (20).

6. The tool holder (2) according to any of the preceding claims,
in which the locking element (20) is a sleeve, in particular a threaded bushing, which is detachably replaceable in the bore (14) from the outside.

7. The tool holder (20) according to any of the preceding claims, in which the locking element (20) does not project past the base body (6).

8. The tool holder (2) according to any of the preceding claims,
in which a clamping nut (16) displaceable in the longitudinal direction (28) of the bore is provided in the base body (6) and into which the clamping bolt (18) is screwed.

9. The tool holder (2) according to claim 8,
in which a locking pin (26) is provided that runs laterally through the base body (6) in the direction of the clamping nut (16) and limits its motion in the longitudinal direction of the bore (28).

10. The tool holder (2) according to claim 9,
in which the clamping nut (16) comprises a groove-like recess (44) with which the locking pin (26) engages.

11. The tool holder (2) according to any of the preceding claims,
in which the bore (14) ends inside the base body (6) and all elements of the clamping means are inserted into the bore (14) from one side.

## Revendications

1. Porte-outil (2) avec un corps de base (6), qui présente, au niveau de son extrémité arrière, un arbre (8) pour le serrage dans un logement d'une machine de traitement, dans lequel, dans le corps de base (6) est prévue une pluralité de logements d'outil (4), dans lesquels, respectivement, un outil de coupe avec un arbre de fixation peut être introduit et peut être serré dans le logement d'outil (4) par le biais d'un dispositif de tension, qui comprend un boulon de serrage (18) s'étendant latéralement à travers un alésage (14) jusqu'au logement d'outil (4) dans le corps de base (6), qui présente, au niveau de son extrémité externe, une tête de boulon (32) pouvant être commandée par le biais d'un outil de réglage, **caractérisé en ce que** la tête de boulon (32) est fixée par le biais d'un élément de fixation (20) vissé sur le corps de base (6) dans la zone de l'alésage (14), formant une butée (42) pour la tête de boulon (32) et présentant un filetage.

2. Porte-outil (2) selon la revendication 1,
dans lequel l'élément de fixation (20) est formé comme un empiècement.

3. Porte-outil (2) selon la revendication 1 ou 2,
dans lequel l'élément de fixation (20) est fixé de manière amovible sur le corps de base (6).

4. Porte-outil (2) selon une des revendications précédentes,
dans lequel l'élément de fixation (20) forme un guide (40) pour la tête de boulon (32).

5. Porte-outil (2) selon une des revendications précédentes,
dans lequel une contre-butée (36) par rapport à la butée (42) prévue sur l'élément de fixation (20) est ensuite formée sur la tête de boulon (32).

6. Porte-outil (2) selon une des revendications précédentes,
dans lequel l'élément de fixation (20) est une gaine, en particulier une gaine filetée, qui peut être remplacée de manière amovible depuis l'extérieur dans l'alésage (14).

7. Porte-outil (20) selon une des revendications précédentes, dans lequel l'élément de fixation (20) ne dépasse pas du corps de base (6).

8. Porte-outil (2) selon une des revendications précédentes,
dans lequel, dans le corps de base (6), un écrou de serrage (16) pouvant être déplacé dans la direction longitudinale de l'alésage (28) est prévu, dans lequel le boulon de serrage (18) est vissé.

9. Porte-outil (2) selon la revendication 8,
dans lequel une goupille de serrage (26) est prévue, qui s'étend latéralement à travers le corps de base (6) dans la direction de l'écrou de serrage (16) et limitant son mouvement dans la direction longitudinale de l'alésage (28).

10. Porte-outil (2) selon la revendication 9,
dans lequel l'écrou de serrage (16) présente une encoche (44) en forme d'écrou, dans laquelle la goupille de fixation (26) vient en prise.

11. Porte-outil (2) selon une des revendications précédentes,
dans lequel l'alésage (14) se termine à l'intérieur du corps de base (6) et l'ensemble des éléments du dispositif de serrage sont introduits d'un côté dans l'alésage (14).
